# EUROPÄISCHE PATENTANMELDUNG

(11) **EP 2 409 577 A1**
(43) Veröffentlichungstag der Anmeldung: **25.01.2012**
(21) Anmeldenummer: 11165606.2
(22) Anmeldetag: 11.05.2011
(51) Int. Cl.: A23L 1/00, A23L 1/48, A23G 3/54, A21D 13/00

(54) **In einem Portionsbehältnis verpacktes Lebensmittelprodukt**

(30) Priorität: 20.07.2010 DE 202010008115 U
(71) Anmelder: ZENTIS GmbH & Co. KG, 52070 Aachen (DE)
(72) Erfinder: Otte, Dietmar, 52076 Aachen (DE)
(74) Vertreter: Bauer, Dirk

(57) **Zusammenfassung**

Die Erfindung betrifft ein in einem Portionsbehältnis verpacktes Lebensmittelprodukt (2) enthaltend
- eine erste Schicht (3) aus einer Fruchtzubereitung,
- eine zweite Schicht (4) aus einer Backware und
- eine dritte Schicht (5) aus einem Milchprodukt.

Um die Essbarkeit des Produkts zu erleichtern sowie eine einfachere Portionierbarkeit mit einem Löffel zu erreichen, wird vorgeschlagen, dass die Schicht (4) aus der Backware von einer losen Schüttung aus Partikeln (7) der Backware gebildet ist.

## Beschreibung

### Einleitung

Die vorliegende Erfindung betrifft ein in einem Portionsbehältnis verpacktes Lebensmittelprodukt, das eine erste Schicht aus einer Fruchtzubereitung, eine zweite Schicht aus einer Backware und eine dritte Schicht aus einem Milchprodukt enthält.

### Stand der Technik

Lebensmittelprodukte, die mehrere Schichten umfassen, sind hinreichend aus dem Stand der Technik bekannt. Beispielsweise beschreibt die DE 295 22 295 U1 ein Mehrschichtdessert, das eine oder mehrere hitzebehandelte Komponenten, die aus Mousse, Creme, Gelee oder Sauce bestehen, umfasst, wobei zur Erzeugung eines so genannten Knackerlebnisses zusätzlich eine brüchige Schicht, z. B. aus Schokolade, vorgesehen ist. Auch in der AT 10 726 U2 wird eine Süßspeise beschrieben, die mindestens eine Schicht mit einer flüssigen Konsistenz und eine Schicht aus Gussschokolade umfasst, wobei die Schokoladenschicht zwecks einer Abdichtung gegen ein Auslaufen der flüssigen Schicht angeordnet wird. Ferner ist aus der DE 92 07 601 U1 die Kombination eines Milchprodukts mit einem körnigen Getreide-Trockenprodukt bekannt.

Lebensmittelprodukte aus einer Kombination einer Fruchtzubereitung, einer Backware und einem Milchprodukt sind sowohl im privaten Haushalt als auch in der Lebensmittelindustrie allgemein bekannt. Beispielsweise werden hauptsächlich in Großbritannien Produkte vertrieben, die aus Früchten, einem darüber angeordneten Keks und wiederum darüber liegendem Pudding bestehen, wobei diese Produkte als sogenannte "Trifles" bekannt sind. Hierbei hat der Keks u.a. die Aufgabe, den Pudding und die Früchte voneinander zu trennen, wodurch die Verflüssigung des Puddings durch aus den Früchten austretenden Fruchtsaft vermieden wird.

Ferner vertreibt die deutsche Firma Edmund Merl GmbH & Co. KG ein Lebensmittelprodukt, das eine Schicht aus Kuchen, eine Schicht aus Früchten sowie eine Schicht aus Sahne umfasst. Dabei ist der Kuchen als eine Art Platte oder Scheibe ausgebildet.

Ein Problem der bekannten Produkte besteht darin, dass die plattenartigen Schichten, die aus einer einstückigen Backware bestehen, schwer mit einem Löffel durchtrennt werden können, so dass eine löffelweise Portionierung und damit die Essbarkeit des Lebensmittelprodukts schwierig ist.

### Aufgabe

Aus diesem Grund ist es Aufgabe der vorliegenden Erfindung, ein Lebensmittelprodukt der vorgenannten Art so weiter zu entwickeln, dass es sich durch eine leichte Essbarkeit sowie eine einfache Portionierbarkeit mit dem Löffel auszeichnet.

### Lösung

Die vorgenannte Aufgabe wird dadurch gelöst, dass die Schicht aus der Backware von einer losen Schüttung aus Partikeln der Backware gebildet ist. Hierdurch wird eine löffelweise Portionierung erheblich vereinfacht, wodurch eine leichte und komfortable Essbarkeit erzielt wird. Alle Schichten des Lebensmittelprodukts sind auf einfache Weise von einem Löffel zu durchstoßen, so dass ein Löffel des Lebensmittelprodukts alle verschiedenen Komponenten des Produkts umfasst, was gerade dem Ziel eines schichtweisen Lebensmittelprodukts entspricht. Darüber hinaus ist es möglich, die verschiedenen Schichten durch Rühren miteinander zu vermischen, falls dies vom Konsumenten bevorzugt wird.

Ein weiterer Effekt der erfindungsgemäßen Backware, die von einer losen Schüttung aus Partikeln gebildet ist, besteht darin, dass die lose Schüttung der Partikel keine beziehungsweise nur eine geringe Kapillarwirkung aufweist, so dass ein Durchfeuchten der Backware, die oftmals oberhalb der Fruchtzubereitung angeordnet ist, gegenüber einer einstückigen Backware reduziert wird.

Die einzelnen Partikel der Backware, die vorzugsweise unregelmäßig geformt - sowohl hinsichtlich ihrer Größe als auch ihrer Oberflächenstruktur beziehungsweise -form - sind, berühren sich in der Schüttung nur an relativ kleinen Kontaktpunkten oder -bereichen, so dass Migrationsvorgänge des Wassers zumindest stark behindert werden.

Dadurch, dass die Schicht aus der Backware weniger oder nur geringfügig durchfeuchtet wird, behält die Schicht der Backware ein appetitliches Aussehen und wird nicht matschig. Dies ist auch für das vermittelte Mundgefühl von Vorteil.

Eine vorteilhafte Weiterbildung des erfindungsgemäßen Lebensmittelprodukts sieht vor, dass die Schicht aus dem Milchprodukt oberhalb der Schicht aus der Backware und letztere oberhalb der Schicht aus der Fruchtzubereitung in dem Portionsbehältnis angeordnet ist. Bei diesem Aufbau wirkt die Schicht aus einer Backware als Trennschicht zwischen der Fruchtzubereitung und dem Milchprodukt, das in unmittelbarer Nähe zu der Fruchtzubereitung aufgrund des aus den Früchten austretenden Fruchtsafts verwässern könnte.

Vorteilhafterweise kann eine vierte Schicht aus Partikeln aus Schokolade oder einem Fett, Kakao und Zucker enthaltenen Lebensmittel in dem erfindungsgemäßen Lebensmittelprodukt angeordnet sein.

Dabei ist es ferner von Vorteil, wenn die vierte Schicht zwischen der Schicht aus der Fruchtzubereitung und der Schicht aus der Backware angeordnet ist. Neben der zusätzlichen geschmacklichen Komponente, die durch die zusätzliche Schokoladenschicht erreicht wird, wirken die Partikel aus Schokolade ebenfalls als Trennschicht zwischen der Fruchtzubereitung und der Backware, so dass ein Durchweichen der in unmittelbarer Nähe der Fruchtzubereitung befindlichen Partikel der Backware weiter verhindert ist. Die Partikel, die beispielsweise aus der EP 0 976 333 und der EP 1 249 487 bekannt sind, weisen vorzugsweise einen gegenüber herkömmlicher Schokolade deutlich erhöhten Fettgehalt auf, weshalb die Partikel kein Wasser aufnehmen, ihre Knackigkeit erhalten und auch eine Bremse gegenüber einer Wassermigration darstellen und damit die Backwarenschicht weiter schützen. Alternativ zu den reinen Schokoladepartikeln können auch solche mit einem Cerealienkern verwendet werden, die außen eine wasserabweisende Schicht aus Hartfett oder einem CBE-Fett (Cacao Butter Equivalent) oder einem CBS-Fett (Cacao Butter Substitute) besitzen und zum Beispiel in der EP 1 707 060 beschrieben sind. Die Größe der Schokoladepartikel beträgt zwischen ca. 1 mm und 10 mm, vorzugsweise zwischen ca. 2 mm und 8 mm

Gemäß einer besonders bevorzugten Ausführungsform der Erfindung enthält die Fruchtzubereitung mindestens einen der nachfolgend genannten Bestandteile:
frische und oder gekochte Früchte, eine Zuckerart, ein künstliches Süßungsmittel, ein Verdickungsmittel, natürliche oder naturidentische Aromastoffe, ein Säuerungsmittel, Wasser, wobei der Fruchtgehalt der Fruchtzubereitung vorzugsweise mindestens 50%, weiter vorzugsweise mindestens 60%, beträgt.

Die Backware enthält gemäß einer weiteren bevorzugten Ausführungsform mindestens einen der nachfolgend genannten Bestandteile:
eine Zuckerart, Mehl oder Schrot eines Getreides, pflanzliches und/oder tierisches Fett oder Öl, ein Eiprodukt, Sorbit, Glycerin, Glukosesirup, Backtriebmittel, ein Emulgator, Aromastoffe, Beta-Karotin.

Ferner ist es von Vorteil, wenn das Milchprodukt mindestens einen der nachfolgenden Bestandteile enthält:
Wasser, Milch (auch Joghurt, Quark, Dickmilch), vorzugsweise Magermilch, pflanzliches Fett, gehärtetes pflanzliches Fett, Buttermilchpulver, Michzucker, eine Zuckerart, ein künstliches Süßungsmittel, einen Stabilisator, Mono- und Diglyceride von Speisefettsäuren. Vorzugsweise ist das Milchprodukt mittels eines Gases, beispielsweise Stickstoff, zu einem Schaum beziehungsweise einer Creme aufgeschlagen, wodurch das Lebensmittelprodukt einen leichten Charakter erhält.

Insbesondere hinsichtlich der Herstellung des erfindungsgemäßen Lebensmittelprodukts ist es vorteilhaft, wenn die Partikel der Backware durch einen Verkleinerungsvorgang aus einem ursprünglich größeren, zusammenhängend ausgebackenem Stück, insbesondere einem Block oder einer Platte, der Backware erzeugt sind. Die im fertigen Produkt vorliegenden Partikel der Backware sollten Abmessungen zwischen ca. 1 mm und 10 mm, vorzugsweise zwischen ca. 2 mm und 5 mm, aufweisen.

Eine bevorzugte Ausführungsform des Lebensmittelprodukts enthält die folgenden Gewichtsanteile der einzelnen Komponenten:
- Fruchtzubereitung: 40 Gew. % bis 60 Gew.-%,
- Backware: 10 Gew.-% bis 30 Gew.-%,
- Milchprodukt: 15 Gew.-% bis 35 Gew.-%,
- Partikel aus Schokolade oder einem Fett, Kakao und Zucker enthaltenden Lebensmittel: 3 Gew.-% bis 10 Gew.-%.

### Ausführungsbeispiel

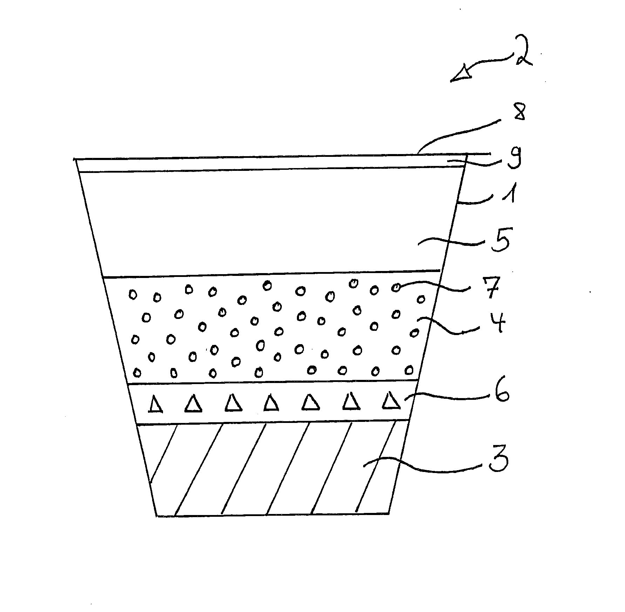

Die Erfindung wird nachfolgend anhand eines Ausführungsbeispiels unter Bezugnahme auf die beigefügte Zeichnung dargestellt.

Die einzige Zeichnungsfigur zeigt einen Schnitt durch einen 100ml Becher 1 als Portionsbehältnis, der eine pyramidenstumpfförmige Form aufweist und aus durchsichtigem Kunststoffmaterial besteht, so dass das Lebensmittelprodukt 2, insbesondere dessen Schichtaufbau, deutlich zu erkennen ist. Das in dem Becher untergebrachte Lebensmittelprodukt 2 besteht aus einer unteren ersten Schicht 3 aus einer Fruchtzubereitung, einer zweiten Schicht 4 aus einer Backware und einer dritten Schicht 5 aus einem Milchprodukt in Form einer mit Stickstoff aufgeschlagenen Milchcreme. Zwischen der untersten ersten Schicht 3 aus der Fruchtzubereitung und der darüber befindlichen zweiten Schicht 4 aus der Backware, bei der es sich um Rührkuchen handelt, ist eine vierte Schicht 6 angeordnet, die von Schokosplits gebildet wird. Aufgrund der Tatsache, dass die zweite Schicht 4 aus der Backware aus einer losen Schüttung aus Partikeln der Backware (Korngrößenverteilung zwischen ca. 2 mm und 8 mm) gebildet wird, umfasst diese einen hohen Anteil von Freiräumen, die einer Kapillarwirkung und damit einem Wassertransport aus der Fruchtzubereitung in die Backware entgegenwirken. Folglich werden die Partikel 7 nicht durchfeuchtet und das Lebensmittelprodukt bleibt ansehnlich und geschmacklich und sensorisch attraktiv.

Im vorliegenden Ausführungsbeispiel besitzen die einzelnen Schichten des gezeigten Lebensmittelprodukts folgende Inhaltsstoffe und Eigenschaften:

| | |
|---|---|
| Fruchtzubereitung: | Früchte, wie beispielsweise Kirschen, Aprikosen, Äpfel, Wald-frucht, Zucker, Pektin, natürliches Aroma, Zitronensäure |
| | |
| | Fruchtgehalt von 65 % |
| | |
| | Trockenmasse von 35 °Brix |
| | pH-Wert von 3,6 mit einer Abweichung von 0,2 |
| | |
| | Aw-Wert von 0,95 |
| | |
| Schokoladensplits: | Kakaomasse, Kakaobutter, Zucker |
| | |
| | Aw-Wert von 0,66 |
| Rührkuchen: | Zucker, Weizenmehl, pflanzliches Fett, Eier, Sorbit, Glycerin, Glucosesirup, Backtriebmittel Natriumcarbonat, Emulgatoren, Mono- und Diglyceride, Aroma, Beta-Carotin |
| | |
| | Aw-Wert von 0,8 |
| | |
| Milchcreme | Wasser, 20 % Magermilch, 11 % gehärtetes pflanzliches Fett, 7 % pflanzliches Fett, Buttermilchpulver, Milchzucker, Zucker, Mono- und Diglyceride, Stabilisatoren Guarkernmehl |
| | |
| | Aw-Wert von 0,97 |

Der Inhalt des Bechers wird durch eine Versiegelung aus einer Aluminiumfolie 8 abgedeckt, die bei erstmaligem Öffnen abgetrennt werden muss. Oberhalb der Milchcreme weist das Lebensmittelprodukt 2 eine Schicht 9 aus Schutzgas auf.

Die Herstellung des gesamten Lebensmittelprodukts 2 erfolgt unter aseptischen oder sterilen Bedingungen, wodurch eine Haltbarkeit von circa 5 bis 12 Tagen bei Temperaturen zwischen 4°C und 8°C erreicht wird.

Alternativ kann die Verpackungseinheit auch durch einen 200ml Becher in Eimerform gebildet werden, oder die Versiegelung des Bechers 1 durch eine Kunststofffolie erfolgen, über der ein abnehmbarer Deckel angeordnet ist, der nicht in der Figur dargestellt ist.

### Bezugszeichenliste

- 1: Becher
- 2: Lebensmittelprodukt
- 3: erste Schicht
- 4: zweite Schicht
- 5: dritte Schicht
- 6: vierte Schicht
- 7: Partikel
- 8: Aluminiumfolie
- 9: Schicht aus Schutzgas

## Patentansprüche

1. In einem Portionsbehältnis verpacktes Lebensmittelprodukt (2) enthaltend
- eine erste Schicht (3) aus einer Fruchtzubereitung,
- eine zweite Schicht (4) aus einer Backware und
- eine dritte Schicht (5) aus einem Milchprodukt
**dadurch gekennzeichnet, dass** die Schicht (4) aus der Backware von einer losen Schüttung aus Partikeln (7) der Backware gebildet ist.

2. Lebensmittelprodukt nach Anspruch 1, **dadurch gekennzeichnet, dass** die Schicht (5) aus dem Milchprodukt oberhalb der Schicht (4) aus der Backware und letztere oberhalb der Schicht (3) aus der Fruchtzubereitung in dem Portionsbehältnis angeordnet ist.

3. Lebensmittelprodukt nach Anspruch 1 oder 2, **gekennzeichnet durch**
- eine vierte Schicht (6) aus Partikeln aus Schokolade oder einem Fett, Kakao und Zucker enthaltenden Lebensmittel.

4. Lebensmittelprodukt nach Anspruch 2 und 3, **dadurch gekennzeichnet, dass** die vierte Schicht (6) zwischen der Schicht (3) aus einer Fruchtzubereitung und der Schicht (4) aus der Backware angeordnet ist.

5. Lebensmittelprodukt nach einem der Ansprüche 1 bis 4, **dadurch gekennzeichnet, dass** die Fruchtzubereitung mindestens einen der nachfolgend genannten Bestandteile enthält:
frische und/oder gekochte Früchte, eine Zuckerart, ein künstliches Süßungsmittel, ein Verdickungsmittel, natürliche oder naturidentische Aromastoffe, ein Säuerungsmittel, Wasser, wobei der Fruchtgehalt der Fruchtzubereitung vorzugsweise mindestens 50 %, weiter vorzugsweise mindestens 60 %, beträgt.

6. Lebensmittelprodukt nach einem der Ansprüche 1 bis 5, **dadurch gekennzeichnet, dass** die Backware mindestens einen der nachfolgend genannten Bestandteile enthält:
eine Zuckerart, Mehl oder Schrot eines Getreides, pflanzliches und/oder tierisches Fett oder Öl, ein Eiprodukt, Sorbit, Glycerin, Glukosesirup, ein Backtriebmittel, ein Emulgator, Aromastoffe, Beta-Karotin.

7. Lebensmittelprodukt nach einem der Ansprüche 1 bis 6, **dadurch gekennzeichnet, dass** das Milchprodukt mindestens eine der nachfolgenden Bestandteile enthält:
Wasser, Milch, vorzugsweise Magermilch, pflanzliches Fett, gehärtetes pflanzliches Fett, Buttermilchpulver, Milchzucker, eine Zuckerart, ein künstliches Süßungsmittel, einen Stabilisator, Mono- und Diglyceride von Speisefettsäuren.

8. Lebensmittelprodukt nach einem der Ansprüche 1 bis 7, **dadurch gekennzeichnet, dass** die Partikel (7) der Backware durch einen Zerkleinerungsvorgang aus einem ursprünglich größeren, zusammenhängend ausgebackenen Stück, insbesondere einem Block oder einer Platte der Backware erzeugt sind.

9. Lebensmittelprodukt nach einem der Ansprüche 1 bis 8, **gekennzeichnet durch** die folgenden Gewichtsanteile der einzelnen Komponenten:
- Fruchtzubereitung: 40 Gew.-% bis 60 Gew.-%,
- Backware: 10 Gew.-% bis 30 Gew.-%,
- Milchprodukt: 15 Gew.-% bis 35 Gew.-%,
- Partikel aus Schokolade oder einem Fett, Kakao und Zucker enthaltenden Lebensmittel: 3 Gew,-% bis 10 Gew.%.
